# EUROPÄISCHE PATENTSCHRIFT

(11) **EP 0 724 087 B1**
(45) Veröffentlichungstag und Bekanntmachung des Hinweises auf die Patenterteilung: **05.07.2000**
(21) Anmeldenummer: 95100940.6
(22) Anmeldetag: 25.01.1995
(51) Int. Cl.: F16D 3/79, F16D 3/62

(54) **Ganzstahlkupplung für Axialkraftübertragung**
Steel coupling for axial force transmission
Accouplement en acier pour transmission de force axiale

(43) Veröffentlichungstag der Anmeldung: 31.07.1996
(73) Patentinhaber: ATEC-Weiss GmbH & Co. KG, D-48691 Vreden (DE)
(72) Erfinder: Valtwies, Ewald Ing. grad., D 46354 Südlohn-Oeding (DE)
(74) Vertreter: Cohausz & Florack

(56) Entgegenhaltungen:
- BE-A- 380 631
- CH-A- 291 590
- DE-A- 2 617 142
- DE-C- 3 443 485
- FR-A- 732 731
- US-A- 1 475 462

## Beschreibung

Die Erfindung betrifft eine Ganzstahlkupplung mit jeweils einem Anschlußflansch für jede der beiden Kupplungshälften und einer zwischen und mit axialem Abstand von den beiden Anschlußflanschen angeordneten federelastischen Lamelleneinheit, die in Umfangsrichtung wechselweise über erste bzw. zweite Spannbolzengruppen mit dem einen oder anderen Anschlußflansch verbunden ist, wobei beidseits der Lamelleneinheit jeweils mindestens ein einer Kupplungshälfte zugeordnetes Haltemittel vorgesehen ist, und wobei jedes der beiden Haltemittel mit unterschiedlichen Spannbolzengruppen kraftschlüssig verbunden ist und beide Haltemittel untereinander über ein Verbindungsmittel kraftschlüssig verbunden sind.

Kupplungen dieser Art werden einzeln oder gruppenweise hintereinandergeschaltet und zur Übertragung von Drehmomenten eingesetzt. Eine solche Kupplung läßt als Einzelkupplung einen Winkelversatz und einen Axialversatz zu und als Kupplungspaar aufgebaut zusätzlich einen Parallelversatz des Antriebs gegenüber dem Abtrieb. Für die Funktionsfähigkeit der Ganzstahlwellenkupplung kommt es wesentlich auf die Befestigung der federelastischen Lamelleneinheit an den Anschlußflanschen an.

In bestimmten Anwendungsfällen der Ganzstahlwellenkupplung ist es erforderlich, daß in Axialrichtung des Kupplungssystems wirkende Kräfte übertragen werden müssen. Hierdurch wird die federelastische Lamelleneinheit stark beansprucht und es besteht die Gefahr der Überdehnung.

Um dahingehend Abhilfe zu schaffen, ist es bekannt, eine Axialspielbegrenzung vorzusehen, die den Axialversatz der Kupplungseinheit dahingehend begrenzt, daß eine Überdehnung vermieden wird. Eine solche herkömmliche Axialspielbegrenzung ist kompliziert aufgebaut und hat zudem den Nachteil, daß ein Nachrüsten bei bestehenden Kupplungen mit hohem Aufwand verbunden ist.

Eine Ganzstahlkupplung der eingangs genannten Art ist aus der US-Patentschrift 1,475,462 bekannt. Diese Ganzstahlkupplung weist jedoch drei Halteteile auf und ist daher relativ kompliziert aufgebaut.

Eine ähnliche Ganzstahlkupplung ist aus der FR-A-732 731 bekannt. Die beiden Haltemittel dieser Ganzstahlkupplung sind jedoch nicht untereinander über ein Verbindungsmittel kraftschlüssig verbunden. Vielmehr ist zwischen den Haltemitteln ein Roll- bzw. Gleitkörper in Form einer Kugel angeordnet.

Ausgehend von diesem Stand der Technik liegt der vorliegenden Erfindung die Aufgabe zugrunde, eine Ganzstahlkupplung der eingangs genannten Art dahingehend weiterzuentwickeln, daß bei einer Axialkraftübertragung eine Sicherheit gegen Überdehnung der Lamelleneinheit bei einem gleichzeitig konstruktiv einfachen Aufbau erreicht wird.

Diese Aufgabe wird erfindungsgemäß zum einen dadurch gelöst, daß die Haltemittel zwischen sich eine aus Kunststoff ausgeführte Distanzscheibe aufweisen.

Gemäß der Erfindung wird auf verhältnismäßig einfache Art und Weise eine Ganzstahlkupplung geschaffen, bei der Axialkräfte ohne Überbeanspruchung der Lamelleneinheit übertragen werden können. Der axiale Kraftschluß erfolgt dabei direkt von der einen Kupplungshälfte über die beiden Haltemittel auf die andere Kupplungshälfte, ohne daß die Lamelleneinheit axial beansprucht wird. Die übrige Funktion der Lamelleneinheit für die Kupplung (z.B. Aufnahme eines Winkelversatzes) wird durch die Haltemittel nicht beeinflußt. Vorhandene Kupplungen lassen sich gemäß dem erfindungsgemäßen Vorschlag leicht nachrüsten, ohne daß ein Umbau von Kupplungsteilen erforderlich ist. Von besonderem Vorteil ist dabei, daß der Nachrüstsatz in den äußeren Abmessungen der herkömmlichen Kupplung entspricht. Ein besonderer Vorteil der angegebenen erfindungsgemäßen Lösung besteht ferner darin, daß bei dynamischer Beanspruchung der Kupplung eine Schwingungsdämpfung durch die aus Kunststoff ausgeführte Distanzscheibe erreicht wird.

Eine andere Lösung der der Erfindung zugrundeliegenden Aufgabe besteht gemäß einer ersten Variante darin, daß die beiden Haltemittel direkt untereinander ohne eine zwischengeschaltete Distanzscheibe gekoppelt sind. Diese Konstruktion erlaubt die Übertragung besonders hoher Axialkräfte.

Eine weitere Lösung besteht gemäß einer zweiten Variante der Erfindung darin, daß die beiden Haltemittel untereinander über ein kranzförmiges Verbindungselement gekoppelt sind, dessen Innendurchmesser mindestens dem Innendurchmesser der Kupplung entspricht, derart, daß im Zentrum der Kupplung eine Durchgangsöffnung verbleibt. Diese Durchgangsöffnung ist insbesondere dann von Vorteil, wenn die Anschlußwellen nicht mit den vorderen Flanschen der Kupplungen abschließen, sondern in diese hineinragen.

Die erfindungsgemäße Modifikation läßt sich sowohl für Ganzstahllaschenkupplungen als auch für Ringlamellenkupplungen vorteilhaft einsetzen.

Die Erfindung wird im folgenden anhand von Ausführungsbeispielen näher erläutert.

Es zeigen:
- Fig. 1: einen Schnitt durch ein erstes Ausführungsbeispiel der Erfindung,
- Fig. 2: ein Detail zum ersten Ausführungsbeispiel im Bereich der in Fig. 1 links dargestellten Kupplungsverbindung,
wobei Fig. 2a einen Schnitt im Bereich der Lamelleneinheit und Fig. 2b eine seitliche Ansicht der Konstruktion nach 2a zeigen,
- Fig. 3: ein zweites Ausführungsbeispiel der Erfindung,
wobei Fig. 3b einen Schnitt im Bereich der Lamelleneinheit und
Fig. 3a eine Draufsicht auf die in Fig. 3b dargestellte Konstruktion zeigen,
- Fig. 4: ein drittes Ausführungsbeispiel der Erfindung,
wobei Fig. 4b einen Schnitt im Bereich der Lamelleneinheit und
Fig. 4a eine Ansicht auf die in Figur 4b dargestellte Konstruktion zeigen und
- Fig. 5: ein Detail des dritten Ausführungsbeispiels der Erfindung,
wobei Fig. 5a einen Schnitt im Bereich der Lamelleneinheit und
Fig. 5b eine Detail in dem mit x-Bereich bezeichneten Bereich von Fig. 5a zeigen.

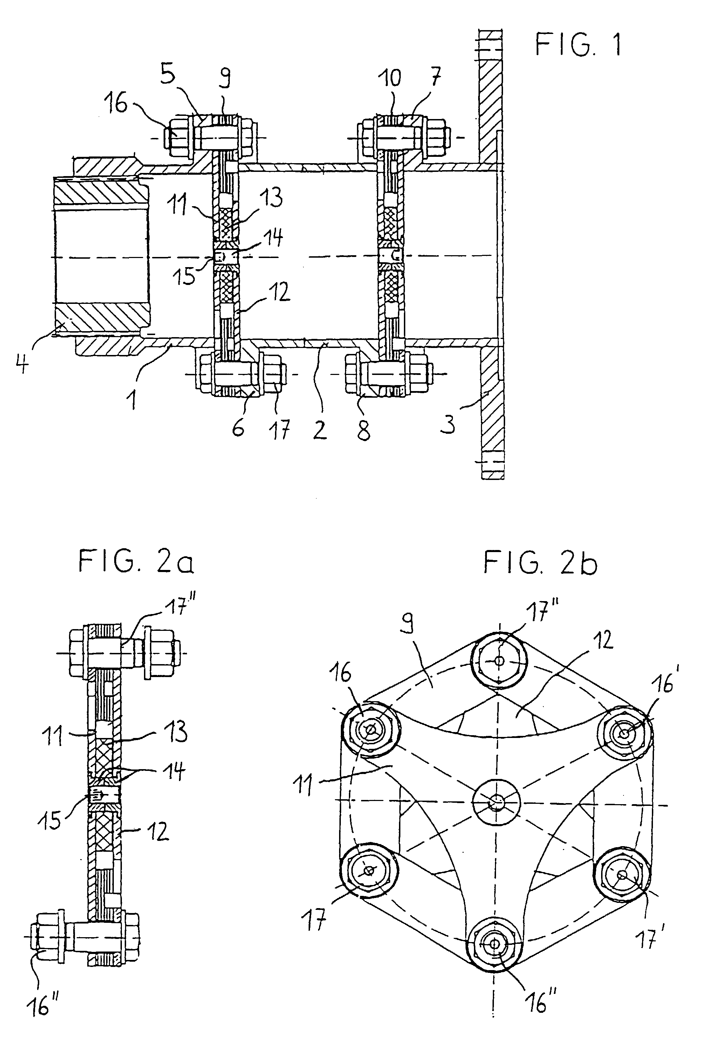

Das in den Figuren 1 und 2 dargestellte erste Ausführungsbeispiel der Erfindung zeigt zwei Hohlwellen, 1, 3, die über zwei gleichartige Kupplungen miteinander über eine Hülse 2 verbunden sind. Die zweite Hohlwelle 3 ist über einen Anschlußflansch mit einem nicht näher bezeichneten Abtrieb verbunden. Die erste Hohlwelle 1 weist eine Innenverzahnung auf, über die sie mit einer Außenverzahnung versehenen Nabe 4 verbunden ist. Die Nabe 4 ist in nicht näher bezeichneter Weise mit dem Antrieb verbunden.

Der Aufbau der in Fig. 1 links bzw. Fig. 2a/b dargestellten Kupplungsverbindung ist wie folgt:

Ein Anschlußflansch 5 der ersten Hohlwelle 1 weist umfänglich versetzte Bohrungen auf, in denen Spannbolzen 16,16',16'' angeordnet sind. Entsprechend weist der Anschlußflansch 6 der Hülse 2 Bohrungen auf, in denen Spannbolzen 17,17',17'' einer zweiten Spannbolzengruppe angeordnet sind. Zwischen den beiden Anschlußflanschen 5, 6 ist ein Lamellenpaketkranz 9 angeordnet, der sich aus einzelnen Laschen zusammensetzt. Der mit Abstand zwischen den Flanschen 5, 6 angeordnete Lamellenpaketkranz ist mittels der Spannbolzen 16,16',16'' bzw. 17,17',17'' wechselweise an dem einen und anderen Flansch 5, 6 angeschlossen.

Beidseits des Lamellenpaketkranzes 9 befindet sich zwischen den Lamellenpaketkranz 9 und dem jeweiligen Anschlußflansch 5, 6 jeweils ein Haltemittel 11, 12. Das dem Anschlußflansch 5 zugeordnete Haltmittel 11 ist mit der ersten Spannbolzengruppe 16 und das dem zweiten Flansch 6 zugeordnete Haltemittel 12 mit der zweiten Spannbolzengruppe 17 gekoppelt.

Die beiden Haltemittel 11, 12 sind untereinander über eine Distanzbuchse 14 gekoppelt. Diese ist zweiteilig ausgeführt und jeweils in das erste 11 und zweite Haltemittel 12 eingeführt. Beide Teile der Distanzbuchse 14 sind miteinander über eine mit einem hochfesten Kleber gesicherte Gewindeverbindung 15 gekoppelt.

Zwischen den beiden Haltemittel 11, 12 eingeschlossen befindet sich eine Distanzscheibe 13, die aus Polyamid ausgeführt ist. Der Aufbau der in Figur 1 im Bereich zwischen der Hülse 2 und der zweiten Hohlwelle 3 dargestellten Kupplung ist derjenigen entsprechend, wie sie oben beschrieben wurde.

Die Funktion der in Figur 1 bzw. 2 dargestellten Ganzstahlkupplung ist wie folgt:

Abgesehen von dem Normalbetrieb der Kupplung, bei dem ein Drehmoment vom Antrieb zum Abtrieb übertragen wird, ist die Kupplung zusätzlich einer Axialkraft unterworfen, die über die mit der Außenverzahnung versehene Nabe 4 eingeleitet wird. Die Axialkraft wird von der ersten Hohlwelle 1 und die miteinander gekoppelten Haltemittel 11, 12 auf die Hülse 2 übertragen und von dort über die entsprechenden Haltemittel der rechten Kupplungsverbindung aud die zweite Hohlwelle 3. Durch die starre, kraftschlüssige Kopplung zwischen den Kupplungselementen unterbleibt eine Axialbelastung der Lamelleneinheit 9 bzw. 10. Die Lamelleneinheit behält jedoch ihre Funktion bezüglich eines Ausgleichs des Winkel- bzw. Parallelversatzes bei.

Erfolgt eine Beaufschlagung der Kupplungseinheit einer dynamischen axialen Belastung, so wirkt sich die aus Kunststoff (Polyamid) ausgeführte Distanzscheibe 13 schwingungsdämpfend aus.

Ergänzend zur Darstellung in Figur 1 zeigen die Figuren 2a und 2b die entsprehenden Details, wobei insbesondere gemäß Figur 2b ersichtlich ist, daß die Haltemittel 12 bzw. 11 bei einer aus sechs Spannbolzen bestehenden Kupplung jeweils als dreieckförmige Elemente gestaltet sind.

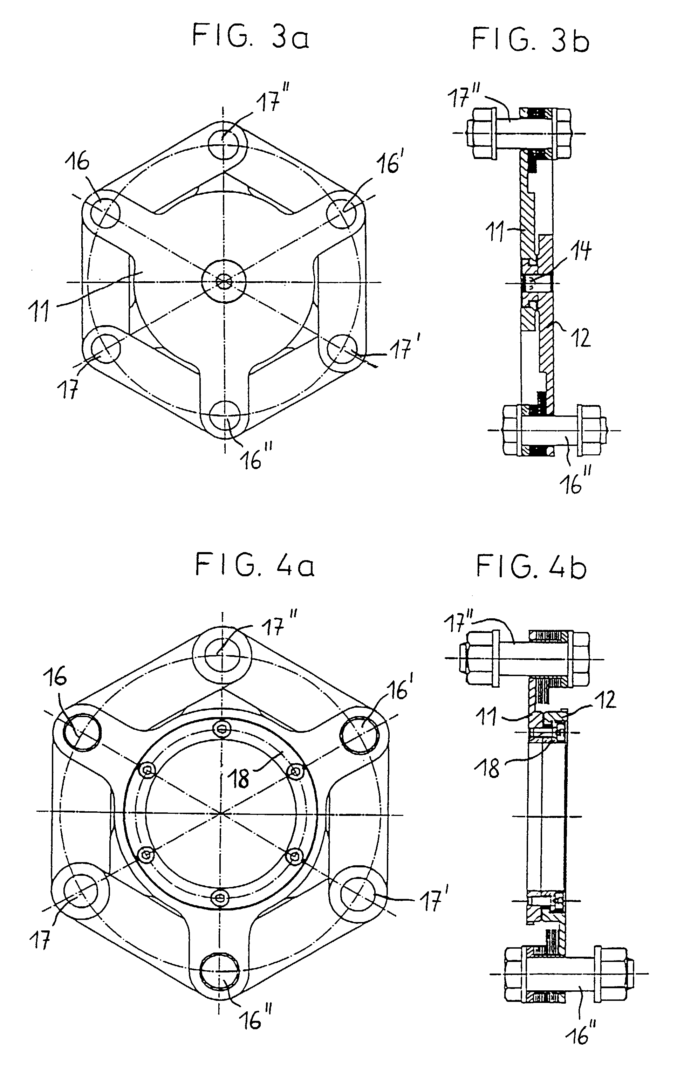

Die in Figur 3 dargestellte zweite Ausführungsform der Erfindung unterscheidet sich von der bisher dargestellten dadurch, daß die beiden Haltemittel 11, 12 direkt untereinander ohne eine zwischengeschaltete Dämpfungsscheibe gekoppelt sind. Diese Konstruktion erlaubt die Übertragung besonders hoher Axialkräfte.

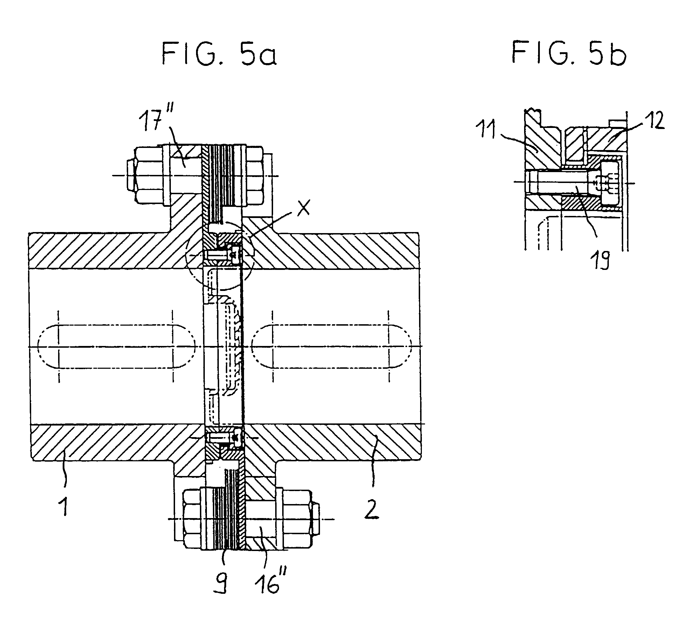

Das in den Figuren 4 und 5 dargestellte dritte Ausführungsbeispiel unterscheidet sich von den bisher dargestellten Ausführungsbeispielen dadurch, daß die Kopplung der beiden Haltemittel 11, 12 über ein kranzförmiges Element 18 erfolgt. Entlang des Umfangs des kranzförmigen Kupplungselementes 18 sind sechs Verschraubungspunkte vorgesehen. Da der Innendurchmesser des kranzförmigen Verbindungelementes 18 mindestens dem Innendurchmesser der Kupplung entspricht, entsteht im Inneren der Kupplung eine Durchgangsöffnung. Bei diesem Ausführungsbeispiel ist die Innenbohrung als Zentrierbohrung ausgeführt, wodurch das Lamellenpaket zusätzlich eine Fixierung erhält. Zusätzlich zu den als Zentrierung wirkenden Befestigungsschrauben erfolgt hierdurch eine weitere Zentrierung des Lamellenpaketes.

## Patentansprüche

1. Ganzstahlkupplung mit jeweils einem Anschlußflansch (5, 6, 7, 8) für jede der beiden Kupplungshälften (1, 2 bzw. 2, 3) und einer zwischen und mit axialem Abstand von den beiden Anschlußflanschen angeordneten federelastischen Lamelleneinheit (9, 10), die in Umfangsrichtung wechselweise über erste (16, 16', 16'') bzw. zweite (17, 17', 17'') Spannbolzengruppen mit dem einen oder anderen Anschlußflansch verbunden ist, wobei beidseits der Lamelleneinheit (9, 10) jeweils mindestens ein einer Kupplungshälfte (1, 2 bzw. 2, 3) zugeordnetes Haltemittel (11, 12) vorgesehen ist, und wobei jedes der beiden Haltemittel (11, 12) mit unterschiedlichen Spannbolzengruppen (16 bzw. 17) kraftschlüssig verbunden ist und beide Haltemittel (11, 12) untereinander über ein Verbindungsmittel (14) kraftschlüssig verbunden sind,
**dadurch gekennzeichnet**, daß die Haltemittel (11, 12) zwischen sich eine aus Kunststoff ausgeführte Distanzscheibe (13) aufweisen.

2. Ganzstahlkupplung mit jeweils einem Anschlußflansch (5, 6, 7, 8) für jede der beiden Kupplungshälften (1, 2 bzw. 2, 3) und einer zwischen und mit axialem Abstand von den beiden Anschlußflanschen angeordneten federelastischen Lamelleneinheit (9, 10), die in Umfangsrichtung wechselweise über erste (16, 16', 16'') bzw. zweite (17, 17', 17'') Spannbolzengruppen mit dem einen oder anderen Anschlußflansch verbunden ist, wobei beidseits der Lamelleneinheit (9, 10) jeweils mindestens ein einer Kupplungshälfte (1, 2 bzw. 2, 3) zugeordnetes Haltemittel (11, 12) vorgesehen ist, und wobei jedes der beiden Haltemittel (11, 12) mit unterschiedlichen Spannbolzengruppen (16 bzw. 17) kraftschlüssig verbunden ist und beide Haltemittel (11, 12) untereinander über ein Verbindungsmittel (14) kraftschlüssig verbunden sind,
**dadurch gekennzeichnet**, daß die beiden Haltemittel (11, 12) direkt untereinander ohne eine zwischengeschaltete Distanzscheibe gekoppelt sind.

3. Ganzstahlkupplung mit jeweils einem Anschlußflansch (5, 6, 7, 8) für jede der beiden Kupplungshälften (1, 2 bzw. 2, 3) und einer zwischen und mit axialem Abstand von den beiden Anschlußflanschen angeordneten federelastischen Lamelleneinheit (9, 10), die in Umfangsrichtung wechselweise über erste (16, 16', 16'') bzw. zweite (17, 17', 17'') Spannbolzengruppen mit dem einen oder anderen Anschlußflansch verbunden ist, wobei beidseits der Lamelleneinheit (9, 10) jeweils mindestens ein einer Kupplungshälfte (1, 2 bzw. 2, 3) zugeordnetes Haltemittel (11, 12) vorgesehen ist, und wobei jedes der beiden Haltemittel (11, 12) mit unterschiedlichen Spannbolzengruppen (16 bzw. 17) kraftschlüssig verbunden ist,
**dadurch gekennzeichnet**, daß die beiden Haltemittel (11, 12) untereinander über ein kranzförmiges Verbindungselement (18) gekoppelt sind, dessen Innendurchmesser mindestens dem Innendurchmesser der Kupplung entspricht, derart, daß im Zentrum der Kupplung eine Durchgangsöffnung verbleibt.

4. Kupplung nach einem der Ansprüche 1 bis 3,
**dadurch gekennzeichnet**, daß das der ersten Kupplungshälfte (1, 2) zugeordnete Haltemittel (11) mit der ersten Spannbolzengruppe (16) und das der zweiten Kupplungshälfte (2, 3) zugeordnete Haltemittel (12) mit der zweiten Spannbolzengruppe (17) gekoppelt ist.

5. Kupplung nach Anspruch 1,
**dadurch gekennzeichnet**, daß die Haltemittel (11, 12) über ein in deren Mittelpunktbereich angeordnetes Kupplungsstück, insbesondere eine Distanzbuchse (14), miteinander gekoppelt sind.

6. Kupplung nach Anspruch 5,
**dadurch gekennzeichnet**, daß das Kupplungsstück (14) eine insbesondere mit einem hochfesten Kleber gesicherte Gewindeverbindung (15) aufweist.

7. Kupplung nach einem der Ansprüche 1 bis 6,
**dadurch gekennzeichnet**, daß die Lamelleneinheit als Ganzstahl-Laschenlamelleneinheit ausgeführt ist.

8. Kupplung nach einem der Ansprüche 1 bis 6,
**dadurch gekennzeichnet**, daß die Lamelleneinheit als Ringlamelleneinheit ausgeführt ist.

## Claims

1. An all-steel coupling with one connecting flange (5, 6, 7, 8) for each of the two coupling halves (1, 2 or 2, 3) and a spring-elastic lamella unit (9, 10) which is arranged between the two connecting flanges at an axial distance therefrom and which is connected in the circumferential direction alternatingly via a first (16, 16', 16") or second (17, 17', 17") group of clamp bolts with the one or the other connecting flange, wherein on either side of the lamella unit (9, 10) there is provided at least one holding means (11, 12) associated with one coupling half (1, 2 or 2, 3), and wherein each of the two holding means (11, 12) is connected in a force-locked way with different groups of clamp bolts (16 or 17) while both holding means (11, 12) are connected in a force-locked way among one another via connecting means (14, 18, 19), characterized in that the holding means (11, 12) are provided with a distance disk (13) between themselves which is made from plastic.

2. An all-steel coupling with one connecting flange (5, 6, 7, 8) for each of the two coupling halves (1, 2 or 2, 3) and a spring-elastic lamella unit (9, 10) which is arranged between the two connecting flanges at an axial distance therefrom and which is connected in the circumferential direction alternatingly via a first (16, 16', 16") or second (17, 17', 17") group of clamp bolts with the one or the other connecting flange, wherein on either side of the lamella unit (9, 10) there is provided at least one holding means (11, 12) associated with one coupling half (1, 2 or 2, 3), and wherein each of the two holding means (11, 12) is connected in a force-locked way with different groups of clamp bolts (16 or 17) while both holding means (11, 12) are connected in a force-locked way among one another via connecting means (14, 18, 19), characterized in that the two holding means (11, 12) are mutually directly coupled without an interposed distance disk.

3. An all-steel coupling with one connecting flange (5, 6, 7, 8) for each of the two coupling halves (1, 2 or 2, 3) and a spring-elastic lamella unit (9, 10) which is arranged between the two connecting flanges at an axial distance therefrom and which is connected in the circumferential direction alternatingly via a first (16, 16', 16") or second (17, 17', 17") group of clamp bolts with the one or the other connecting flange, wherein on either side of the lamella unit (9, 10) there is provided at least one holding means (11, 12) associated with one coupling half (1, 2 or 2, 3), and wherein each of the two holding means (11, 12) is connected in a force-locked way with different groups of clamp bolts (16 or 17), characterized in that the two holding means (11, 12) are mutually coupled via a rim-like connecting element (18) whose inner diameter corresponds at least to the inner diameter of the coupling in such a way that a pass-through opening remains in the centre of the coupling.

4. A coupling as claimed in one of the claims 1 to 3, characterized in that the holding means (11) associated with the first coupling half (1, 2) is coupled with the first group of clamp bolts (16) and the holding means (12) associated with the second coupling half (2, 3) is coupled with the second group of clamp bolts (17).

5. A coupling as claimed in claim 1, characterized in that the holding means (11, 12) are mutually coupled through a coupling element, in particular a spacer bushing (14), which is arranged in the zone of their central point.

6. A coupling as claimed in claim 5, characterized in that the coupling element (14) has a thread-connection (15) secured with a highly solid adhesive.

7. A coupling as claimed in one of the claims 1 to 6, characterized in that the lamella unit is an all-steel lamella shackle unit.

8. A coupling as claimed in one of the claims 1 to 6, characterized in that the lamella unit is a multi-ring lamella unit.

## Revendications

1. Accouplement tout-acier comprenant une bride de raccord (5, 6, 7, 8) pour chacune des deux moitiés d'accouplement (1, 2 ou 2, 3) et une unité à lamelles (9, 10) à élasticité de ressort disposée entre les deux brides de raccord et à distance axiale de celles-ci, unité qui est reliée de façon alternée à l'une ou à l'autre bride de raccord selon la direction circonférentielle par l'intermédiaire d'un premier (16, 16', 16") et d'un deuxième (17, 17', 17") groupes de boulons de serrage, au moins un moyen de maintien (11, 12) associé à chaque fois à une moitié d'accouplement (1, 2 ou 2, 3) étant prévu sur les deux côtés de l'unité à lamelles (9, 10), et chacun des deux moyens de maintien (11, 12) étant relié par frottement à des groupes de boulons de serrage (16 ou 17) différents, et les deux moyens de maintien (11, 12) étant reliés mutuellement par frottement par un moyen de liaison (14),
caractérisé en ce que les moyens de maintien présentent, disposé entre eux, un disque entretoise (13) en matière plastique.

2. Accouplement tout-acier comprenant une bride de raccord (5, 6, 7, 8) pour chacune des deux moitiés d'accouplement (1, 2 ou 2, 3) et une unité à lamelles (9, 10) à élasticité de ressort disposée entre les deux brides de raccord et à distance axiale de celles-ci, unité qui est reliée de façon alternée à l'une ou à l'autre bride de raccord selon la direction circonférentielle par l'intermédiaire d'un premier (16, 16', 16") et d'un deuxième (17, 17', 17") groupes de boulons de serrage, au moins un moyen de maintien (11, 12) associé à chaque fois à une moitié d'accouplement (1, 2 ou 2, 3) étant prévu sur les deux côtés de l'unité à lamelles (9, 10), et chacun des deux moyens de maintien (11, 12) étant relié par frottement à des groupes de boulons de serrage (16 ou 17) différents, et les deux moyens de maintien (11, 12) étant reliés mutuellement par frottement par un moyen de liaison (14),
caractérisé en ce que les deux moyens de maintien (11, 12) sont accouplés mutuellement directement sans disque entretoise intercalé.

3. Accouplement tout-acier comprenant une bride de raccord (5, 6, 7, 8) pour chacune des deux moitiés d'accouplement (1, 2 ou 2, 3) et une unité à lamelles (9, 10) à élasticité de ressort disposée entre les deux brides de raccord et à distance axiale de celles-ci, unité qui est reliée de façon alternée à l'une ou à l'autre bride de raccord selon la direction circonférentielle par l'intermédiaire d'un premier (16, 16', 16") et d'un deuxième (17, 17', 17") groupes de boulons de serrage, au moins un moyen de maintien (11, 12) associé à chaque fois à une moitié d'accouplement (1, 2 ou 2, 3) étant prévu sur les deux côtés de l'unité à lamelles (9, 10), et chacun des deux moyens de maintien (11, 12) étant relié par frottement à des groupes de boulons de serrage (16 ou 17) différents,
caractérisé en ce que les deux moyens de maintien (11, 12) sont accouplés mutuellement par un élément de liaison (18) en forme de couronne dont le diamètre intérieur correspond au moins au diamètre intérieur de l'accouplement, de façon qu'il reste une ouverture de passage dans le centre de l'accouplement.

4. Accouplement selon l'une des revendications 1 à 3,
caractérisé en ce que le moyen de maintien (11) associé à la première moitié d'accouplement (1, 2) est accouplé au premier groupe de boulons de serrage (16), et en ce que le moyen de maintien (12) associé à la deuxième moitié d'accouplement (2, 3) est accouplé au deuxième groupe de boulons de serrage (17).

5. Accouplement selon la revendication 1,
caractérisé en ce que les moyens de maintien (11, 12) sont accouplés l'un à l'autre par une pièce d'accouplement disposée dans la zone de leur axe central, notamment par une douille entretoise (14).

6. Accouplement selon la revendication 5,
caractérisé en ce que la pièce d'accouplement (14) dispose d'une liaison à filet (15) notamment verrouillée par de la colle à haute résistance.

7. Accouplement selon l'une des revendications 1 à 6,
caractérisé en ce que l'unité à lamelles est une unité à lamelles à collier tout-acier.

8. Accouplement selon l'une des revendications 1 à 6,
caractérisé en ce que l'unité à lamelles est une unité à lamelles annulaire.
